# EUROPÄISCHE PATENTSCHRIFT

(11) **EP 4 487 032 B1**
(45) Veröffentlichungstag und Bekanntmachung des Hinweises auf die Patenterteilung: **10.12.2025**
(21) Anmeldenummer: 23702616.6
(22) Anmeldetag: 06.02.2023
(51) Int. Cl.: F16H 57/04, F16H 57/03

(54) **GETRIEBEGEHÄUSE MIT GEBOHRTER ÖLMULDE**
GEARBOX HOUSING WITH A DRILLED OIL WELL
CARTER DE TRANSMISSION POURVU DE CUVETTE D'HUILE PERCÉE

(30) Priorität: 01.03.2022 EP 22159442
(43) Veröffentlichungstag der Anmeldung: 08.01.2025
(73) Patentinhaber: Flender Industriegetriebe GmbH, 09322 Penig (DE)
(72) Erfinder: MESSINK, Christoph, 09322 Penig (DE); JOSTEN, Guido, 09322 Penig (DE)
(74) Vertreter: Michalski Hüttermann & Partner Patentanwälte mbB
(86) Internationale Anmeldenummer: PCT/EP2023/052777
(87) Internationale Veröffentlichungsnummer: WO 2023/165781

(56) Entgegenhaltungen:
- EP-A1- 3 499 091
- CN-A- 104 048 022
- CN-A- 112 065 875
- DE-A1- 102013 018 712
- DE-A1- 102021 002 928
- US-A- 3 785 458

## Beschreibung

Die Erfindung betrifft ein Getriebegehäuse, mit zumindest mehreren Seitenwandungen, wobei zumindest eine der Seitenwandungen eine oder mehrere Gehäuseöffnungen zur Aufnahme einer Lagerung aufweist und wobei an einer Innenseite einer Seitenwandung eine sich vertikal oberhalb einer Gehäuseöffnung in Richtung der Gehäuseöffnung sich trichterförmig verjüngende Rippenstruktur ausgebildet ist. Über die Rippenstruktur wird Spritzöl bzw. Schmieröl gesammelt, um es beispielsweise einer Lagerung von in dem Getriebegehäuse aufgenommenen Getriebekomponenten zuzuführen.

Das Auffangen und die fluidmäßige Führung von Spritzöl bzw. Schmieröl innerhalb eines Getriebegehäuse erfolgt regelmäßig über verhältnismäßig aufwändig eingegossene Ölführungsrippen und/oder Ölaufnahmetaschen. Die Ölführungsrippen dienen in erste Linie der beschriebenen Ölführung und nicht irgendeiner Versteifung oder Verstärkung der Gehäusestruktur an sich. Es besteht ein ständiges Bedürfnis Getriebegehäuse im Hinblick auf das Auffangen und die fluidmäßige Führung von Spritzöl bzw. Schmieröl zu verbessern und hierbei den Aspekt der Versteifung und Verstärkung der Gehäusestruktur miteinzubeziehen. Die CN 104048022 B zeigt ein Getriebegehäuse mit einer U-förmigen Rippenstruktur an der unteren Flanke an der gießtechnisch eine Hinterschneidung hergestellt ist, so dass hierdurch eine Sammelmulde entsteht. Damit das dort sich sammelnde Öl zum Lager fließen kann, ist von dem Lagersitz nach vertikal oben eine Bohrung gesetzt, so dass die Bohrung mit der Sammelmulde kommunizieren kann. Die US 3 785 458 zeigt eine Beölung eines Lagers über einen Lagedeckel und eine Ölbohrung. Die DE 10 2021 002928 A1 zeigt ein Getriebegehäuse mit einer horizontale Bohrung in einer Seitenwandung. Auf der Innenseite des Gehäuses ist eine Sammelmulde für Öl vorgesehen. In vertikaler Richtung ragt die Sammelmulde tiefer als die Bohrung. Die EP 3 499 091 A1 zeigt ein Getriebegehäuse, in dem ein Zahnrad über eine Lagerung drehbar gehalten ist. Die Lagerung wird über eine Ölrinne mit Schmieröl versorgt. Die CN 112 065 875 A zeigt ein Getriebegehäuse mit einer inwandigen trichterförmigen Rippenstruktur. Die Rippenstruktur mündet mit einer Durchlassöffnung in höchsten Bereich einer Lageraufnahmeöffnung. Über die Durchlassöffnung kann über die Rippenstruktur aufgefangenes Öl zu der Lageraufnahmeöffnung gelangen.

Es ist die Aufgabe der Erfindung Maßnahmen aufzuzeigen, die eine Verbesserung beim Auffangen und Führung von Spritzöl bzw. Schmieröl unter dem Aspekt der Versteifung und Verstärkung der Gehäusestruktur ermöglichen.

Die Lösung der Aufgabe erfolgt durch ein Getriebegehäuse mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Getriebegehäuse, umfassend mehrere Seitenwandungen, wobei zumindest eine der Seitenwandungen eine oder mehrere Gehäuseöffnungen zur Aufnahme einer Lagerung aufweist, wobei an einer Innenseite einer Seitenwandung eine sich vertikal oberhalb einer Gehäuseöffnung in Richtung der Gehäuseöffnung sich trichterförmig verjüngende Rippenstruktur ausgebildet ist, wobei eine Sammelmulde vorgesehen ist, in die die sich trichterförmig verjüngende Rippenstruktur mündet und die durch eine die Seitenwandung durchtretende Bohrung gebildet wird.

In einer regelmäßig zu erwartenden Betriebssituation sind die Seitenwandungen senkrecht bzw. vertikal ausgerichtet. Dies bedeutet, dass es sich bei einer lotrechten Richtung, die auf der Ebene der Gehäuseöffnungen der Seitenwände steht, um eine Horizontalrichtung handelt. Es können zwei horizontal sich gegenüberliegende Seitenwandungen mit oberhalb einer jeweiligen Gehäuseöffnung in Richtung der Gehäuseöffnung sich trichterförmig verjüngenden Rippenstrukturen vorgesehen sein. Die Seitenwandungen können auf einem Gehäuseboden stehen. Es können Gehäusefüße vorgesehen sein, die im Wesentlich von dem Gehäuseboden ausgebildet werden, aber auch bis in die Seitenwandungen gezogen sein können.

In dem Getriebegehäuse können Stirnräder und/oder Kegelstirnräder über entsprechende Wellen aufgenommen sein. Die Wellen können über in den Gehäuseöffnungen aufgenommene Lagerungen drehbar gelagert sein. Die Gehäuseöffnungen sind zweckmäßigerweise als runde Bohrungen ausgeführt. Als Lagerungen können beispielsweise Wälzlager eingesetzt werden.

Das Getriebegehäuse kann bereichsweise oder überwiegend dünnwandig ausgeführt werden, wobei der hierdurch entstehende Verlust an Steifigkeit durch die Rippenstruktur an den Innenseiten der Seitenwandungen zumindest ausgeglichen wird. Es kann auch eine weitere Rippenstruktur oder Verrippung vorgesehen sein, die zur Steifigkeit des Getriebegehäuses beiträgt.

Die Rippenstruktur wird durch einen von einer hauptsächlichen Oberfläche sich abhebenden Überstand gebildet. In einer einfachen Ausgestaltung kann vorgesehen sein, dass die Rippenstruktur lediglich durch zwei sich nach vertikal unten verjüngend zueinander verlaufende Rippen gebildet wird. Die trichterförmig verjüngende Rippenstruktur kann im Übrigen auch als V-förmig bezeichnet werden. Es ist hierbei nicht zwingend erforderlich, dass die V-Form vertikal unten spitz zuläuft. Es kann auch vorgesehen sein, dass der untere Bereich der Rippenstruktur abgerundet verläuft. Sogar eine U-Form wäre für gewisse Anwendungen denkbar. Über die Rippenstruktur ist ein gezieltes Auffangen des Spritzöls und Weiterleiten des aufgefangenen Öls zu den Lagerstellen möglich.

Die Sammelmulde öffnet sich im Wesentlichen nach vertikal oben. Eine Oberfläche der Sammelmulde kann eine gleiche Oberflächenbeschaffenheit wie eine Oberfläche der Bohrung innerhalb der Seitenwandung haben. Bevorzugt weist die Oberflächenbeschaffenheit der Sammelmulde und der Bohrung eine deutlich geringere Oberflächenrauigkeit als die benachbarte Rippenstruktur und die Innenfläche der Seitenwandung auf. Über die Sammelmulde und die durch die Seitenwandung hindurchtretende Bohrung ist es möglich das aufgefangene Schmieröl außerhalb der Seitenwandung zu sammeln und gezielt der dort angeordneten Lagerung von außen zuzuführen.

Gemäss der Erfindung bildet die Bohrung mit einem auf der Innenseite der Seitenwandung liegenden Abschnitt die Sammelmulde aus. Dies bedeutet, dass die Sammelmulde ein Teil der Bohrung ist. Nach vertikal unten wird die Sammelmulde bevorzugt zumindest partiell von der durch die Bohrung nicht erfasste Rippenstruktur begrenzt ist. Dadurch braucht gießtechnisch kein Hinterschnitt vorgesehen werden, da der für die Sammelmulde erforderliche Hinterschnitt durch die Bohrung erzeugt wird, die die Rippenstruktur in einem Bereich vertikal unterhalb und in axialer Verlängerung der Bohrung unberührt lässt.

In einer bevorzugten Ausgestaltung ist vorgesehen, dass die Bohrung die Seitenwandung in einer zu einer Hauptebene der Seitenwandung lotrechten Richtung durchtritt. Dies ist fertigungstechnisch insbesondere vorteilhaft, da auch weitere Bohrungen, beispielsweise für Schraubenlöcher, lotrecht zur Wandung gesetzt werden. Insofern kann vorliegend das gleiche Werkzeug zum Einsatz kommen.

In einer bevorzugten Ausgestaltung ist vorgesehen, dass die Sammelmulde aus einer lotrechten Richtung auf die Seitenwandung betrachtet einen Hinterschnitt aufweist. Hierdurch wird das aufgefangene Spritzöl zumindest weitestgehend daran gehindert in das Innere des Getriebegehäuses überzulaufen.

In einer bevorzugten Ausgestaltung ist vorgesehen, dass eine vertikale Tiefe der Sammelmulde zwischen 1/3 und 2/3 des Durchmessers der Bohrung beträgt. Hierdurch ist in vorteilhafter Weise gewährleistet, dass das Setzen der Bohrung durch die Seitenwandung innerhalb gewisser Toleranzen erfolgen kann. Besonders bevorzugt ist, wenn die vertikale Tiefe zwischen 2/5 und 3/5 des Durchmessers beträgt. Aus funktioneller Sicht ist insbesondere bevorzugt, wenn die vertikale Tiefe der Sammelmulde den halben Durchmesser der Bohrung beträgt.

In einer zudem bevorzugten Ausgestaltung ist vorgesehen, dass die Gehäuseöffnung und die Bohrung durch einen Gehäuseseitendeckel abgedeckt werden. Hierbei wird durch den Gehäuseseitendeckel ein Nebenvolumen gegenüber dem eigentlichen Gehäusevolumen gebildet. Dieses Nebenvolumen kann dazu genutzt werden Öl zu speichern, bevor das Öl durch die Lagerung wieder abfließen kann, um die Lagerung hierüber zu schmieren und zu kühlen.

Das Getriebegehäuse weist einen Montagedeckel auf, dessen Innenwandung in einer bevorzugten Ausgestaltung von einem Innenvolumen des Getriebegehäuses ausgehend nach außen gewölbt ist. Hier ist in vorteilhafter Weise gewährleistet, dass an die Innenwandung des Montagedeckels gespritzes Schmieröl in Richtung einer der Seitenwandungen abläuft, um dort auf den Seitenwandungen von der trichterförmigen Rippenstruktur aufgefangen zu werden. Insbesondere ist vorgesehen, dass die Wölbung der Innenwandung in zu der Seitenwandung senkrecht verlaufenden und vertikal stehenden Schnittebene verläuft.

Die Aufgabe wird außerdem gelöst durch ein Verfahren zur Herstellung eines der beschriebenen Ausgestaltungen eines Getriebegehäuses, bei dem über einen gießtechnischen Prozess die sich trichterförmig verjüngende Rippenstruktur an einer Innenseite einer Seitenwandung aus einer lotrechten Richtung auf die Seitenwandung betrachtet hinterschnittfrei gegossen wird und die Sammelmulde über ein Setzen der Bohrung in die Seitenwandung in einem vertikal unteren Bereich der Rippenstruktur erzeugt wird. Von Vorteil ist, dass bei dem Verfahren die Rippenstruktur an der Innenseite der Seitenwandung hinterschnittfrei gegossen wird. Dies erleichtert und vereinfacht den Gießprozess, da keine hinterschneidenden Gießkerne vorgesehen werden müssen und diese im Anschluss nicht mehr aus den Hinterschneidungen herausgeschlagen werden müssen.

Bei einer bevorzugten Ausgestaltung des Verfahrens wird die Bohrung von einer Außenseite der Seitenwandung nach innen gesetzt, wobei eine Zentrierung der Bohrung auf der vertikalen Höhe eines Fußpunktes der Rippenstruktur liegt. Mit Zentrierung ist vorliegend die Mittelachse der Bohrung gemeint. Der Fußpunkt der Rippenstruktur ist durch den Übergang von der vertikalen Seitenwandung zu der die Rippenstruktur bildende Aufwölbung gebildet. Der Übergang liegt zweckmäßigerweise in den vertikal tiefsten Punkt. Die Bohrung wird also mit ihrer Mittelachse derart gesetzt, dass die Mittelachse im Wesentlichen in diesen Fußpunkt bzw. Übergang zwischen Seitenwandung und Rippenstruktur liegt und in Wesentlichen mit einem halben Bohrungsdurchmesser weiter in der Rippenstruktur verläuft und mit einem halben Bohrungsdurchmesser vertikal oberhalb der Rippenstruktur, und damit von der Rippenstruktur freigestellt, verläuft. Bei der Aufteilung, welcher Anteil des Bohrungsdurchmesser in der Rippenstruktur verläuft und welcher entsprechend komplementäre Anteil von der Rippenstruktur freigestellt verläuft, kann von der hälftigen Verteilung abgewichen werden, wie weiter oben bereits beschrieben wurde.

Die Aufgabe wird ferner gelöst durch eine Industrieapplikation umfassend ein Antriebsmittel, das drehmomentübertragend mit einem Getriebe verbunden ist, wobei das Getriebe drehmomentübertragend mit einer mechanischen Anwendung gekoppelt ist, wobei das Getriebe mit einem wie zuvor beschriebenen Getriebegehäuse ausgebildet ist.

Zudem wird die Aufgabe gelöst durch eine Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen eines Getriebes mit einem wie zuvor beschriebenen Getriebegehäuse, wobei die Datenpakete dazu hergerichtet sind bei einer Verarbeitung durch eine Datenverarbeitungseinrichtung eine Herstellung des Getriebegehäuses, insbesondere durch 3D-Druck mittels eines 3D-Druckers, und/oder eine Simulation der Funktionsweise des Getriebegehäuses durchzuführen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: ein Getriebegehäuse in einem Vertikalschnitt;
Fig. 2: einen weiteren Vertikalschnitt des Getriebegehäuses nach Figur 1;
Fig. 3: eine Detailierung einer Rippenstruktur des Getriebegehäuses nach Figur 1;
Fig. 4: eine perspektivische Ansicht des Getriebegehäuses nach Figur 1 und
Fig. 5: eine prinzipmäßige Darstellung einer Industrie-Applikation.

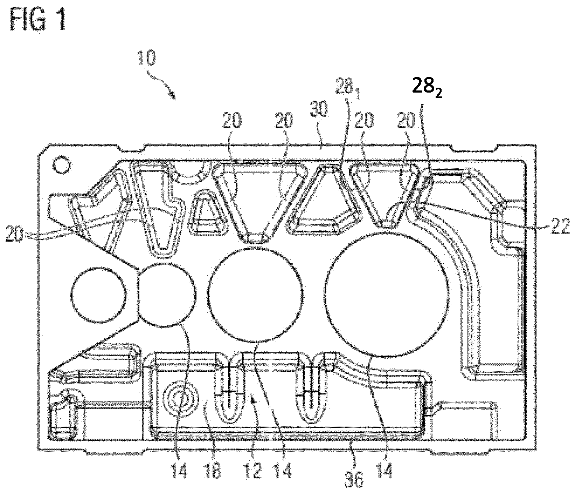

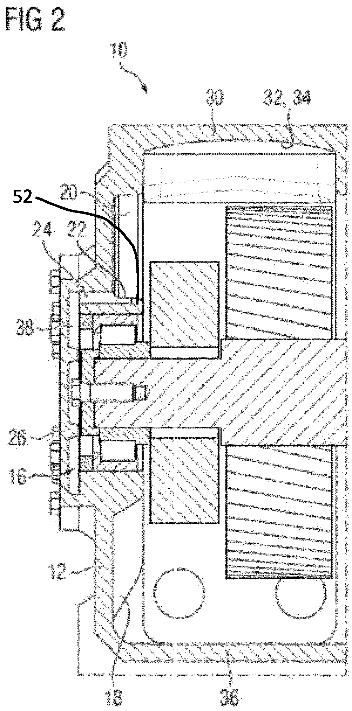

Die Figur 1 zeigt ein Getriebegehäuse 10 in einem Vertikalschnitt. Dargestellt ist eine Innenseite 18 einer Seitenwandung 12 des Getriebegehäuses 10. Auf der infolge des Schnittes nicht sichtbaren horizontal gegenüberliegenden Seite ist eine weitere Seitenwandung vorgesehen. Zudem umfasst das Getriebegehäuse 10 einen Boden 36 und einen als demontierbaren Montagedeckel 30 ausgebildeten Deckel. In der Seitenwandung 12 sind mehrere runde Gehäuseöffnungen 14 zur Aufnahme von in der Figur 1 nicht dargestellten Lagerungen vorgesehen. In dem Getriebegehäuse 10 kann in einem betriebsfertigen Zustand beispielsweise ein Kegelstirnradgetriebe oder ein Stirnradgetriebe mit seinen entsprechenden Einzelteilen aufgenommen sein. Weiterhin ist in dem Getriebegehäuse ein Volumen von Schmieröl aufgenommen, über das sowohl eine Schmierung der im Betrieb ineinandergreifenden Verzahnungen als auch der Lagerungen 16, siehe hierzu Figur 2, erfolgen kann. Die Schmierung erfolgt, indem zumindest eines der umlaufenden Zahnräder in das unten im Getriebegehäuse 10 in einem Ölsumpf gehaltene Schmieröl eintauchen und hierüber eine Weitergabe des Schmieröls an den oder die Verzahnungspartner erfolgt. Infolge der Drehung der Zahnräder wird das Schmieröl von diesen abgeschleudert, so dass es sich als Spritzöl an den Innenwandungen des Getriebegehäuses 10 niederschlägt und der Schwerkraft folgend in den Ölsumpf herunterläuft.

In der Figur 1 ist zu erkennen, dass die Innenseite 18 der Seitenwandung 12 eine als mehrfache Rippenstruktur 20 ausgeführte Strukturierung aufweist. Die Rippenstruktur 20 wird durch einen von einer hauptsächlichen Oberfläche abhebenden Überstand gebildet. In einer einfachsten Ausgestaltung ist auf einer Innenseite 18 der Seitenwandung 12 nur eine Rippenstruktur 20 gebildet, die wiederum durch zwei sich nach vertikal unten verjüngend zueinander verlaufende Rippen 28₁, 28₂ gebildet wird. Die trichterförmig verjüngende Rippenstruktur 20 läuft nach vertikal unten annähernd V-förmig zusammen, wobei die Rippen 28₁, 28₂ unten nicht zwingend spitz aufeinandertreffen müssen. Es kann auch eine kurzer horizontaler Verbindungsbereich zwischen den Rippen 28₁, 28₂ vorgesehen sein. Bei allen denkbaren Ausgestaltungen mündet die sich trichterförmig verjüngende Rippenstruktur 20 in einer Sammelmulde 22. Die Sammelmulde 22 dient dazu, Öl aufzufangen. Insbesondere sammelt sich in der Sammelmulde 22 Öl, das von oben kommend an der Seitenwand 12 innerhalb der Rippenstruktur 20 herabläuft. Die Rippenstruktur 20 und die Sammelmulde 22 sind um Wesentlichen mittig oberhalb der Gehäuseöffnung 14 der Seitenwandung 12 positioniert.

Die Figur 2 zeigt einen gegenüber der Figur 1 um 90° gedrehten Vertikalschnitt durch das Getriebegehäuse 10, wobei die in der Ansicht rechte Seitenwandung nicht dargestellt ist. Zu erkennen ist die linke Seitenwandung 12 mit einer in der Gehäuseöffnung 14 aufgenommenen Lagerung 16. Die Lagerung 16 umfasst vorliegend ein Kegelrollenlager, wobei hierauf nicht detailliert einzugehen ist. Es können auch andere Lagertypen vorgesehen sein. Die Gehäuseöffnung 14 ist mit einem Gehäuseseitendeckel 26 verschlossen, wobei der Gehäuseseitendeckel 26 beispielsweise über umfängliche Verschraubungen gegenüber der Seitenwandung 18 gehalten sein kann. Innerhalb des Gehäuseseitendeckels 26 ist gegenüber der Seitenwandung 12 ein Nebenvolumen 38 gebildet und das Nebenvolumen 38 ist offen gegenüber der in der Gehäuseöffnung 14 einsitzenden Lagerung 16. Der Vertikalschnitt der Figur 2 ist so gelegt, dass er mittig durch die oberhalb der Gehäuseöffnung 14 liegende Rippenstruktur 20 und die Sammelmulde 22 verläuft. Weiterhin ist eine Bohrung 24 zu erkennen, die durch die Seitenwandung 12 hindurchtritt und die die Sammelmulde 22 in dem unteren Bereich der Rippenstruktur 20 bildet. Auf der Außenseite der Seitenwandung 12 öffnet sich die Bohrung 24 innerhalb des von dem Gehäuseseitendeckel 26 umschlossenen Nebenvolumen 38. Die durch die Bohrung 24 im Inneren des Getriebegehäuses 10 gebildete Sammelmulde 22 ist über den weiteren Verlauf der Bohrung 24 innerhalb der Seitenwandung 12 kommunizierend mit dem Nebenvolumen 38 verbunden. Schmieröl, dass sich in der Sammelmulde 22 fängt kann folglich über den weiteren Verlauf der Bohrung 24 in der Seitenwandung 12 in das Nebenvolumen 38 gelangen. Von dem Nebenvolumen 38 kann das Schmieröl in und durch die Lagerung 16 gelangen.

Der Montagedeckel 30 des Getriebegehäuses 10 ist derart ausgeformt, dass eine Innenwandung 32 des Montagedeckels 30 von einem Innenvolumen des Getriebegehäuses 10 ausgehend nach außen gewölbt ist. Hierbei verläuft die Wölbung 34 der Innenwandung 32 in zu der Seitenwandung 12 senkrecht verlaufenden und vertikal stehenden Schnittebene, wie sie in der Figur 2 gelegt ist.

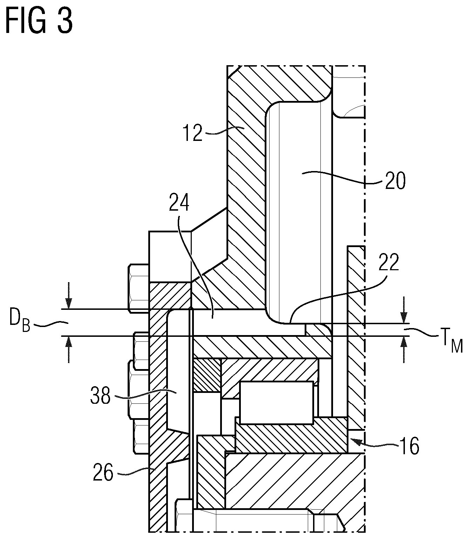

Die Figur 3 zeigt eine Detailierung der Rippenstruktur 20 und die durch die Seitenwandung 12 hindurchtretende Bohrung 24, die innenseitig die Sammelmulde 22 ausbildet. Die Bohrung 24 ist durch die Seitenwandung 12 in horizontaler Richtung hindurchgeführt. Dies ist fertigungstechnisch einfach zu bewerkstelligen, da die überwiegend meisten Bearbeitungsschritte an dem Getriebegehäuse 12 ohnehin in zueinander orthogonalen Richtungen erfolgen. Die Sammelmulde 22 weist aus einer lotrechten Richtung auf die Seitenwandung 12 betrachtet einen Hinterschnitt auf. Dieser Hinterschnitt ist allerdings nicht das Ergebnis des Gießprozesses, indem bei diesem beispielsweise ein entsprechender Gießkern eingesetzt wurde, sondern ist das Ergebnis des Bohrvorgangs der Bohrung 24, der von außen nach innen durch die Seitenwandung 12 vorgenommen wurde und bei dem der untere Bereich der Rippenstruktur 20 nicht vollständig durchbohrt wurde. Der Durchmesser der Bohrung 24 ist in der Figur 3 mit D_{B} bezeichnet. Gleichermaßen ist eine vertikale Tiefe der Sammelmulde 22 mit T_{M} bezeichnet. Die vertikale Tiefe T_{M} der Sammelmulde 22 reicht von einem Grund der Sammelmulde 22 bis zu der Höhe der hinterschneidenden Rippenstruktur 20. Vorliegend ist das Verhältnis von Durchmesser D_{B} der Bohrung 24 zu Tiefe T_{M} der Sammelmulde 22 derart getroffen, dass die Tiefe T_{M} im Wesentlichen dem halben Durchmesser D_{B} entspricht. Bereits zuvor wurde beschrieben, dass dieses Verhältnis auch anders getroffen werden kann, wenn dies für eine Anwendung zweckmäßig ist.

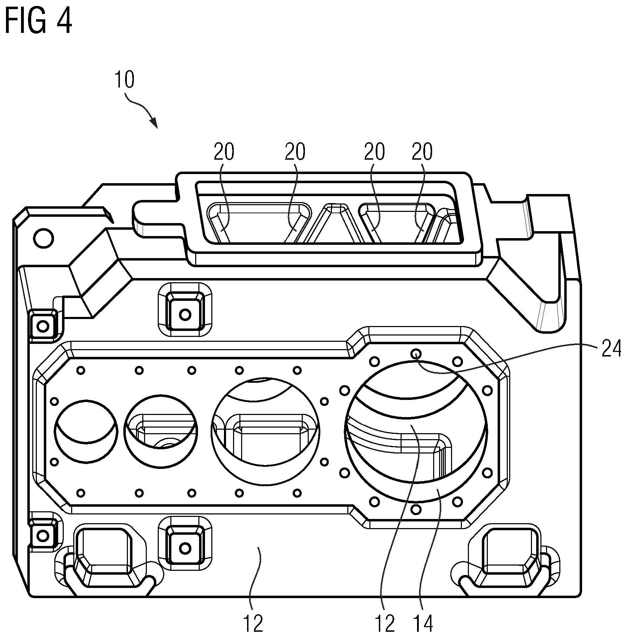

In der Figur 4 ist ein Getriebegehäuse 10 in perspektivischer Ansicht gezeigt. Es sind der vorderseitige Gehäuseseitendeckel 26 und der Montagedeckel 30 ausgeblendet. Zu erkennen ist oberhalb der rechten Gehäuseöffnung 14 die Bohrung 24, die auf der Innenseite der Seitenwandung 12 die Sammelmulde 22 im Fußbereich der Rippenstruktur 20 ausbildet.

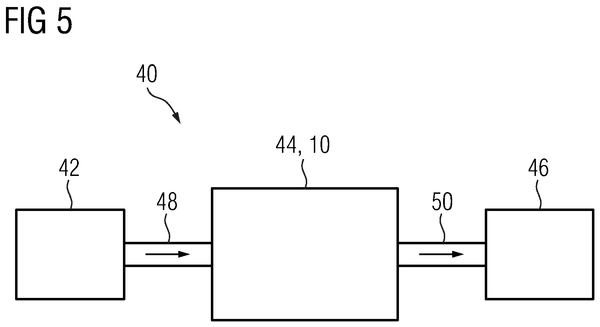

Eine Ausführungsform einer Industrieapplikation 40 ist in Fig. 5 dargestellt. Die Industrie-Applikation 40 umfasst ein Antriebsmittel 42, das beispielsweise als Elektromotor, als Verbrennungsmotor oder als Hydraulikmotor ausgebildet ist. Das Antriebsmittel 42 ist drehmomentübertragend mit einem Getriebe 44 gekoppelt, das wiederum mit einer mechanischen Anwendung 46 verbunden ist. Das Antriebsmittel 42 ist zum Abgeben einer Antriebsleistung ausgebildet, die über eine Leistungswelle 48 dem Getriebe 44 zugeführt wird. Durch das Getriebe 44 wird die eingehende Antriebsleistung, unter Berücksichtigung von Reibungsverlusten, bezüglich Drehzahl und Drehmoment gewandelt und als Ausgangsleistung über eine Leistungswelle 50 an die mechanische Anwendung 46 weitergeleitet.

### Bezugszeichenliste

- 10: Getriebegehäuse
- 12: Seitenwandung
- 14: Gehäuseöffnung
- 16: Lagerung
- 18: Innenseite
- 20: Rippenstruktur
- 22: Sammelmulde
- 24: Bohrung
- 26: Gehäuseseitendeckel
- 28: Rippe
- 30: Montagedeckel
- 32: Innenwandung
- 34: Wölbung
- 36: Boden
- 38: Nebenvolumen
- 40: Industrieapplikation
- 42: Antriebsmittel
- 44: Getriebe
- 46: mechanische Anwendung
- 48: Leistungswelle
- 50: Leistungswelle

## Patentansprüche

1. Getriebegehäuse (10), umfassend
mehrere Seitenwandungen (12), wobei zumindest eine der Seitenwandungen (12) eine oder mehrere Gehäuseöffnungen (14) zur Aufnahme einer Lagerung (16) aufweist, wobei an einer Innenseite (18) einer der Seitenwandungen (12) eine sich vertikal oberhalb einer der Gehäuseöffnungen (14) in Richtung der Gehäuseöffnung (14) sich trichterförmig verjüngende Rippenstruktur (20) ausgebildet ist,
wobei eine Sammelmulde (22) vorgesehen ist, in die die sich trichterförmig verjüngende Rippenstruktur (20) mündet,
**dadurch gekennzeichnet, dass** die Sammelmulde (22) durch eine die Seitenwandung (12) durchtretende Bohrung (24) gebildet wird und die Bohrung (24) mit einem auf der Innenseite (18) der Seitenwandung (12) liegenden Abschnitt die Sammelmulde (22) ausbildet.

2. Getriebegehäuse (10) nach Anspruch 1, **dadurch gekennzeichnet, dass** die Sammelmulde (22) zumindest partiell von der durch die Bohrung (24) nicht erfasste Rippenstruktur (20) begrenzt ist.

3. Getriebegehäuse (10) nach einem der Ansprüche 1 bis 2, **dadurch gekennzeichnet, dass** die Bohrung (24) die Seitenwandung (12) in einer zu einer Hauptebene der Seitenwandung (12) lotrechten Richtung durchtritt.

4. Getriebegehäuse (10) nach einem der Ansprüche 1 bis 3, **dadurch gekennzeichnet, dass** die Sammelmulde (22) aus einer lotrechten Richtung auf die Seitenwandung (12) betrachtet einen Hinterschnitt (52) aufweist und der Hinterschnitt (52) durch einen Teil der durch die Bohrung (24) nicht erfasste Rippenstruktur (20) gebildet ist.

5. Getriebegehäuse (10) nach einem der Ansprüche 1 bis 4, **dadurch gekennzeichnet, dass** eine vertikale Tiefe (T_{M}) der Sammelmulde (22) zwischen 1/3 und 2/3 eines Durchmessers (D_{B}) der Bohrung (24) beträgt.

6. Getriebegehäuse (10) nach Anspruch 5, **dadurch gekennzeichnet, dass** die vertikale Tiefe (T_{M}) zwischen 2/5 und 3/5, bevorzugt ½, des Durchmessers (D_{B}) beträgt.

7. Getriebegehäuse (10) nach einem der Ansprüche 1 bis 6, **dadurch gekennzeichnet, dass** die Gehäuseöffnung (14) und die Bohrung (24) durch einen Gehäuseseitendeckel (26) abgedeckt werden.

8. Getriebegehäuse (10) nach einem der Ansprüche 1 bis 7, **dadurch gekennzeichnet, dass** die Rippenstruktur (20) durch zumindest zwei sich nach vertikal unten verjüngend zueinander verlaufende Rippen (28₁, 28₂) gebildet wird.

9. Getriebegehäuse (10) nach einem der Ansprüche 1 bis 8, **dadurch gekennzeichnet, dass** ein Montagedeckel (30) vorgesehen ist, dessen Innenwandung (32) von einem Innenvolumen des Getriebegehäuses (10) ausgehend nach außen gewölbt ist.

10. Getriebegehäuse (10) nach Anspruch 9, **dadurch gekennzeichnet, dass** die Wölbung (34) der Innenwandung (32) in zu der Seitenwandung (12) senkrecht verlaufenden und vertikal stehenden Schnittebene verläuft.

11. Getriebegehäuse (10) nach einem der Ansprüche 1 bis 10, **dadurch gekennzeichnet, dass** zwei horizontal sich gegenüberliegende Seitenwandungen (12) mit oberhalb einer jeweiligen Gehäuseöffnung (14) in Richtung der Gehäuseöffnung (14) sich trichterförmig verjüngende Rippenstrukturen (20) vorgesehen sind.

12. Verfahren zur Herstellung eines Getriebegehäuses (10) nach einem der Ansprüche 1 bis 11, bei dem über einen gießtechnischen Prozess die sich trichterförmig verjüngende Rippenstruktur (20) an einer Innenseite (18) einer Seitenwandung (12) aus einer lotrechten Richtung auf die Seitenwandung (12) betrachtet hinterschnittfrei gegossen wird und **dadurch gekennzeichnet, dass**
die Sammelmulde (22) über ein Setzen der Bohrung (24) in die Seitenwandung (12) in einem vertikal unteren Bereich der Rippenstruktur (20) erzeugt wird.

13. Verfahren nach Anspruch 12, bei dem die Bohrung (24) von einer Außenseite der Seitenwandung (12) nach innen gesetzt wird, wobei eine Zentrierung der Bohrung (24) auf der vertikalen Höhe eines Fußpunktes der Rippenstruktur (20) liegt.

14. Industrieapplikation (40) umfassend ein Antriebsmittel (42), das drehmomentübertragend mit einem Getriebe (44) verbunden ist, wobei das Getriebe (44) drehmomentübertragend mit einer mechanischen Anwendung (46) gekoppelt ist, **dadurch gekennzeichnet, dass** das Getriebe (44) mit einem Getriebegehäuse (10) nach einem der Ansprüche 1 bis 11 ausgebildet ist.

## Claims

1. Transmission housing (10) comprising
a plurality of side walls (12), wherein at least one of the side walls (12) has one or more housing openings (14) for accommodating a bearing (16), wherein a rib structure (20) which tapers in a funnel shape vertically above one of the housing openings (14) in the direction of the housing opening (14) is formed on an inner side (18) of one of the side walls (12),
wherein a collecting pan (22) is provided into which the rib structure (20) which tapers in a funnel shape opens, **characterized in that** the collecting pan (22) is formed by a drill hole (24) traversing the side wall (12) and the drill hole (24) forms the collecting pan (22) with a portion situated on the inner side (18) of the side wall (12).

2. Transmission housing (10) according to Claim 1, **characterized in that** the collecting pan (22) is delimited at least partially by the rib structure (20) not included by the drill hole (24).

3. Transmission housing (10) according to one of Claims 1 to 2, **characterized in that** the drill hole (24) traverses the side wall (12) in a direction perpendicular to a main plane of the side wall (12).

4. Transmission housing (10) according to one of Claims 1 to 3, **characterized in that** the collecting pan (22) has an undercut (52), considered from a direction perpendicular to the side wall (12), and the undercut (52) is formed by a part of the rib structure (20) not included by the drill hole (24).

5. Transmission housing (10) according to one of Claims 1 to 4, **characterized in that** a vertical depth (T_{M}) of the collecting pan (22) is between 1/3 and 2/3 of a diameter (D_{B}) of the drill hole (24).

6. Transmission housing (10) according to Claim 5, **characterized in that** the vertical depth (T_{M}) is between 2/5 and 3/5, preferably ½, of the diameter (D_{B}).

7. Transmission housing (10) according to one of Claims 1 to 6, **characterized in that** the housing opening (14) and the drill hole (24) are covered by a housing side cover (26).

8. Transmission housing (10) according to one of Claims 1 to 7, **characterized in that** the rib structure (20) is formed by at least two ribs (28₁, 28₂) which taper vertically downwards towards each other.

9. Transmission housing (10) according to one of Claims 1 to 8, **characterized in that** a mounting cover (30) is provided, the inner wall (32) of which is bulged outwards starting from an internal volume of the transmission housing (10).

10. Transmission housing (10) according to Claim 9, **characterized in that** the bulge (34) of the inner wall (32) extends within a vertical plane of section extending perpendicular to the side wall (12).

11. Transmission housing (10) according to one of Claims 1 to 10, **characterized in that** two side walls (12) situated horizontally opposite each other are provided with rib structures (20) which taper in a funnel shape above a respective housing opening (14) in the direction of the housing opening (14).

12. Method for producing a transmission housing (10) according to one of Claims 1 to 11, in which the rib structure (20) which tapers in a funnel shape is cast, via a casting process, with no undercuts on an inner side (18) of a side wall (12), considered from a direction perpendicular to the side wall (12), and **characterized in that**
the collecting pan (22) is produced by making the drill hole (24) in the side wall (12) in a vertically lower region of the rib structure (20).

13. Method according to Claim 12, in which the drill hole (24) is made inwards from an outer side of the side wall (12), wherein a centre of the drill hole (24) lies at the vertical height of a foot of the rib structure (20).

14. Industrial application (40) comprising a drive means (42) which is connected in a torque-transmitting fashion to a transmission (44), wherein the transmission (44) is coupled in a torque-transmitting fashion to a mechanical application (46), **characterized in that** the transmission (44) is formed with a transmission housing (10) according to one of Claims 1 to 11.

## Revendications

1. Carter de transmission (10) comprenant
plusieurs parois latérales (12), au moins une des parois latérales (12) comportant une ou plusieurs ouvertures (14) de carter destinées à recevoir un support (16), une structure nervurée (20) rétrécissant en forme d'entonnoir verticalement au-dessus d'une des ouvertures (14) de carter en direction de l'ouverture (14) de carter étant formée sur un côté intérieur (18) d'une des parois latérales (12),
un creux de collecte (22) étant prévu, dans lequel débouche la structure nervurée (20) rétrécissant en forme d'entonnoir,
**caractérisé en ce que** le creux de collecte (22) est formé par un alésage (24) traversant la paroi latérale (12) et l'alésage (24) forme le creux de collecte (22) avec une section située sur le côté intérieur (18) de la paroi latérale (12).

2. Carter de transmission (10) selon la revendication 1, **caractérisé en ce que** le creux de collecte (22) est délimité en moins en partie par la structure nervurée (20) non comprise par l'alésage (24).

3. Carter de transmission (10) selon l'une des revendications 1 à 2, **caractérisé en ce que** l'alésage (24) traverse la paroi latérale (12) dans une direction perpendiculaire à un plan principal de la paroi latérale (12).

4. Carter de transmission (10) selon l'une des revendications 1 à 3, **caractérisé en ce que** le creux de collecte (22) comporte, vu depuis une direction perpendiculaire sur la paroi latérale (12), une contre-dépouille (52) et la contre-dépouille (52) est formée par une partie de la structure nervurée (20) non comprise par l'alésage (24).

5. Carter de transmission (10) selon l'une des revendications 1 à 4, **caractérisé en ce qu'**une profondeur verticale (T_{M}) du creux de collecte (22) est comprise entre 1/3 et 2/3 d'un diamètre (D_{B}) de l'alésage (24).

6. Carter de transmission (10) selon la revendication 5, **caractérisé en ce que** la profondeur verticale (T_{M}) est comprise entre 2/5 et 3/5 du diamètre (D_{B}), de manière préférée est égale à ½ du diamètre.

7. Carter de transmission (10) selon l'une des revendications 1 à 6, **caractérisé en ce que** l'ouverture (14) de carter et l'alésage (24) sont recouverts par un couvercle latéral (26) de carter.

8. Carter de transmission (10) selon l'une des revendications 1 à 7, **caractérisé en ce que** la structure nervurée (20) est formée par au moins deux nervures (28₁, 28₂) s'étendant l'une par rapport à l'autre de manière à se rétrécir vers le bas verticalement.

9. Carter de transmission (10) selon l'une des revendications 1 à 8, **caractérisé en ce qu'**un couvercle de montage (30) est prévu, dont la paroi intérieure (32) est bombée en partant d'un volume intérieur du carter de transmission (10) vers l'extérieur.

10. Carter de transmission (10) selon la revendication 9, **caractérisé en ce que** le bombement (34) de la paroi intérieure (32) s'étend dans un plan de coupe vertical s'étendant verticalement par rapport à la paroi latérale (12).

11. Carter de transmission (10) selon l'une des revendications 1 à 10, **caractérisé en ce que** deux parois latérales (12) se faisant face horizontalement sont prévues avec des structures nervurées (20) rétrécissant en forme d'entonnoir au-dessus d'une ouverture (14) de carter respective en direction de l'ouverture (14) de carter.

12. Procédé de fabrication d'un carter de transmission (10) selon l'une des revendications 1 à 11, dans lequel la structure nervurée (20) rétrécissant en forme d'entonnoir est coulée sans contre-dépouille vue depuis une direction perpendiculaire sur la paroi latérale (12) sur un côté intérieur (18) d'une paroi latérale (12) par un processus technique de coulée, et **caractérisé en ce que**
le creux de collecte (22) est produit en plaçant l'alésage (24) dans la paroi latérale (12) dans une zone verticalement inférieure de la structure nervurée (20).

13. Procédé selon la revendication 12, dans lequel l'alésage (24) est placé vers l'intérieur depuis un côté extérieur de la paroi latérale (12), un centrage de l'alésage (24) étant situé à la hauteur verticale d'un point de base de la structure nervurée (20).

14. Application industrielle (40) comprenant un moyen d'entraînement (42), qui est relié à une transmission (44) par transfert de couple de rotation, la transmission (44) étant couplée à une application mécanique (46) par transfert de couple de rotation, **caractérisée en ce que** la transmission (44) est formée avec un carter (10) de transmission selon l'une des revendications 1 à 11.
